Europäisches Patentamt

European Patent Office

Office européen des brevets

(11) Publication number: **0 260 064 B1**

(12) **EUROPEAN PATENT SPECIFICATION**

(45) Date of publication of patent specification: **29.07.92**  (51) Int. Cl.⁵: **C10G  1/04**

(21) Application number: **87307772.1**

(22) Date of filing: **03.09.87**

(54) **Process for separating organic material from particulate solids.**

(30) Priority: **12.09.86 US 906727**

(43) Date of publication of application:
**16.03.88 Bulletin  88/11**

(45) Publication of the grant of the patent:
**29.07.92 Bulletin  92/31**

(84) Designated Contracting States:
**AT BE CH DE ES FR GB IT LI LU NL SE**

(56) References cited:
**DE-A- 3 345 563**
**US-A- 4 389 300**

(73) Proprietor: **THE STANDARD OIL COMPANY**
**200 Public Square, 36-F-3454**
**Cleveland Ohio 44114(US)**

(72) Inventor: **Eppig, Christopher P.**
**2193 Harcourt Drive**
**Cleveland Hts., OH 44106(US)**
Inventor: **Stalzer, Richard B.**
**1251 West Sprague Road**
**Broadview Hts., OH 44147(US)**
Inventor: **Paspek, Stephen C.**
**7387 Pamela Drive**
**North Royalton, OH 44133(US)**

(74) Representative: **Smith, Sydney et al**
**Elkington and Fife, Beacon House, 113 Kingsway**
**London WC2B 6PP(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Technical Field

This invention relates to a process for separating an organic material from a composition comprising said organic material intermixed with particulate solids. This invention is particularly suitable for separating hydrocarbons from solid wastes and hazardous wastes (e.g., petroleum waste, refinery sludge). It is also suitable for treating catalyst fines-containing streams (e.g., decanter oil streams from fluid catalytic cracking units), oil-contaminated drill cuttings, steel mill scale, bleaching clay and the like.

Background of the Invention

Refinery sludges are typically mixtures of hydrocarbon oils, heavy residual hydrocarbons including asphaltenes, water and particulate solids. These sludges are produced from a number of refinery units, including various standard waste water treatment separators. These sludges often contain substances such as benzene, toluene, xylene, chrysene and the like which are "listed" by the Environmental Protection Agency (EPA) as hazardous substances.

Historically, refinery sludges have been economically disposed of by land-filling and land-farming techniques. However, land disposal is now regulated by the Resource Conservation and Recovery Act (RCRA) and the Hazardous and Solid Waste Amendments of 1984 (RITA), and has consequently become more difficult and expensive.

U.S. Patent 4,341,619 discloses a process for recovering carbonaceous materials from tar sands by supercritical extraction involving countercurrent flow of the tar sand and a solvent. The solvents that are disclosed as being useful include aromatic hydrocarbons, alicyclic hydrocarbons having 5-16 carbon atoms, phenols, and nitrogen-containing compounds.

U.S. Patent 4,434,028 discloses a method and apparatus for removing oil and other organic constituents from particulate, inorganic-rich mineral solids. The reference indicates that the disclosed method and apparatus are particularly suitable for removing oil from oil-contaminated drill cuttings.

The final report for EPA Contract No. 68-02-3924 which is entitled "Pilot Plant Evaluation of Critical Fluid Extractions for Environmental Applications" discloses the results of using liquified-gas solvents in a pilot plant to extract oil from steel mill scale and bleaching clay.

There is a need for an efficient, economical and reliable process for treating refinery sludges to render the product solids delistable or to facilitate additional handling and treatment of the solids, e.g., treatment by cementing to prevent metals leaching. It would be advantageous if this process were adaptable to treating other solid and hazardous wastes as well as other solids/hydrocarbon-containing materials such as catalyst fines-containing streams (e.g., decanter oil streams from fluid catalytic cracking units), oil-contaminated drill cuttings, steel mill scale, bleaching clay.

The present invention provides a process for separating hydrocarbon oil and heavy residual organics from a feed composition comprising solids intermixed with said hydrocarbon oil and heavy residual organics, said heavy residual organics having higher boiling points than said hydrocarbon oil, said process comprising the steps of:

(1) contacting said feed composition with a first hydrocarbon fluid of from 2 to 9 carbon atoms for an effective period of time to extract at least part of said hydrocarbon oil from said feed composition and form a first separatable phase comprising said hydrocarbon oil and said first hydrocarbon fluid, and separating at least part of said first separatable phase from said feed composition to provide a first intermediate composition;

(2) contacting said first intermediate composition from step (1) with a second hydrocarbon fluid for an effective period of time to extract at least part of said heavy residual organics from said first intermediate composition and form a second separatable phase comprising said second hydrocarbon fluid and said heavy residual organics, said second hydrocarbon fluid being capable of dissolving said heavy residual organics at a temperature in the range of 30°F (-1°C) to 400°F (204°C) and a pressure below about 500psig (3,450kpag), and separating at least part of second separatable phase from said first intermediate composition to provide a second intermediate composition, at least part of said second hydrocarbon fluid remaining in said second intermediate composition; and

(3) contacting said second intermediate composition from step (2) with a third hydrocarbon fluid of from 2 to 9 carbon atoms for an effective period of time to extract at least part of said second hydrocarbon fluid from said second intermediate composition and form a third separatable phase comprising said third hydrocarbon fluid and said second hydrocarbon fluid, and separating at least part of said third separatable phase from said second intermediate composition to provide a treated product.

Fig. 1 is a flow sheet illustrating the first step of the process of the invention in a preferred form with the effluent from the contactor being returned directly to a refinery system.

Fig. 2 is a flow sheet illustrating an alternative first step of the process of the invention in another preferred form using flashing to separate the first hydrocarbon fluid in the effluent from the contactor from the oil in such effluent.

Fig. 3 is a flow sheet illustrating yet another preferred first step of the process of the invention using distillation to separate the first hydrocarbon fluid in the effluent from the contactor from the oil in such effluent.

Fig. 4 is a flow sheet illustrating a final preferred form of the first step of the invention using flashing and vapor compression to separate the first hydrocarbon fluid in the effluent from the contactor from the oil in such effluent and to then recycle the first hydrocarbon fluid.

Fig. 5 is a flow sheet illustrating a preferred embodiment of the process of the invention wherein the sludge to be treated is initially contacted with a first hydrocarbon fluid and then subsequently contacted with a second and third hydrocarbon fluid.

As indicated the compositions that can be treated in accordance with the invention comprise solids intermixed with an organic material which includes hydrocarbon oil and heavy residual organics, which heavy residual organics have a higher boiling point than the hydrocarbon oil. The organic material is typically in a liquid state at the pressure and temperature employed in the operation of the inventive process, although part of such organic material may be in a solid state at such pressure and temperature. These compositions also typically include water intermixed with the organic material and particulate solids.

The compositions that can be treated include solid waste and/or hazardous waste, including petroleum waste and refinery sludge. The term "solid waste" refers to any garbage, sludge or other waste material not excluded by EPA definitions. The term "hazardous waste" refers to solid waste or combinations of solid waste which are "listed" by the EPA as hazardous, or which exhibit ignitability, corrosivity or reactivity, or are considered toxic pursuant to relevant governmental rules or regulations. The term "petroleum waste" refers to any waste material containing petroleum or hydrocarbon oil intermixed with particulate solids and, in many instances, water. The term "refinery sludge" refers to sludges generated in petroleum refinery operations that contain petroleum or hydrocarbon oils intermixed with particulate solids; these sludges also contain water and the hydrocarbon oils in these sludges usually contain heavy residual hydrocarbons including asphaltenes.

The compositions that can be treated also include oil-contaminated catalyst fines (a refinery by-product), oil-contaminated drill cuttings (an oil well drilling by-product), oil-contaminated mill scale (a steel mill by-product), oil-contaminated bleaching clay (a vegetable oil filtering media). A specific example of the oil-contaminated catalyst fines that can be treated are the fines in decanter oil streams from fluid catalytic cracking units.

Preferably, the compositions that are treated are refinery sludges. A typical refinery sludge contains from 1 to 15% by weight hydrocarbon oil, from 75 to 98% by weight water, and from 1 to 15% by weight solids.

Throughout the remainder of this specification, the inventive process will be discussed in terms of treating refinery sludge, but it is to be understood that the principles and features discussed herein are equally applicable with respect to the treatment of any composition comprising an organic material intermixed with particulate solids. The first and third hydrocarbon fluids containing 2 to 9 carbon atoms may be aliphatic and cycloaliphatic and preferably contain from 2 to 4 carbon atoms. Examples of preferred fluids include propane, cyclopropane, propylene, butane, isobutane, cyclobutane, the butenes (e.g., butene-1, cis-butene-2, trans-butene-2), the butadienes (e.g., 1,3-butadiene), isobutylene and liquified petroleum gas (LPG). Examples of commercial grades of LPG that are useful include Commercial Propane, Commercial Butane, Commercial Propane-Butane Mixtures, Special Duty Propane and Propane HD-5, the specifications for which can be found in "Liquified Petroleum Gas Specifications and Test Methods", the Gas Processors Association, Tulsa, Oklahoma, GPA Publication 2140-75, and ASTM Standard D1835-82; Mixtures of two or more of the foregoing fluids can be used. Propane and commercial grades of LPG (e.g., Commercial Propane and Commercial Propane-Butane Mixtures) are particularly preferred.

In the first step of the process according to the invention the first hydrocarbon fluid is advanced through the sludge being treated at an effective rate to drive the hydrocarbon oil in such sludge from the particulate solids. Undesirable heavy residual organic materials remaining intermixed with the particulate solids after treatment with the first hydrocarbon fluid typically comprise hydrocarbons having lower relative mutual solubilities, lower mutual diffusivities and /or higher viscosities than the first hydrocarbon fluid. These undesirable residual organic materials also include hydrocarbons that are in a solid state at the operating

3

temperature and pressure of the process. Examples of these undesirable residual organic materials include heavy residual hydrocarbons including asphaltenes , condensed ring aromatics, resins, complex mixtures of high-boiling hydrocarbons (e.g., hydrocarbons having boiling points in excess of about 232°C (450°F) and an average of about 15 carbon atoms or more per molecule), and the like. These undesirable residual organic materials can be separated from the solids according to the invention by advancing a second hydrocarbon fluid as defined herein through the particulate solids at an effective rate to drive the undesirable residual organic material from the particulate solids.

The second hydrocarbon fluids are selected from those hydrocarbon fluids which dissolve heavy residual hydrocarbons including asphaltenes at temperatures in the range of -1.1°C (30°F) to 204°C (400°F), preferably about 93°C (200°F), and at pressures below about 3447 kPag (500 psig). These second hydrocarbon fluids are preferably aromatic compounds such as, for example, benzene, toluene, xylene (i.e.), o-xylene, m-xylene, p-xylene) or a mixture of two or more of such aromatic compounds. In a particularly preferred embodiment, the second hydrocarbon fluid is preferably an aromatic or aromatic-enriched fluid that is readily available from a refinery system such as, for example, one or more of the reformate fluids (e.g., light reformate, heavy reformate) that are produced by reformers in a typical refinery system. A typical light reformate fluid has an initial boiling point of about 21°C (70°F), a final boiling point of about 118°C (245°F), a benzene content of about 13% by weight and a toluene content of about 34% by weight. A typical heavy reformate fluid has an initial point of about 110°C (230°F), a final boiling point of about 191°C (375°F), and contains toluene, ethylbenzene, o-xylene and p-xylene.

According to the present invention, it is also necessary to further treat the particulate solids with a third hydrocarbon fluid as defined herein to separate any second hydrocarbon fluid that may remain intermixed with the particulate solids. The third hydrocarbon fluid can be the same hydrocarbon fluid that is used initially, or it can be different. The third hydrocarbon fluid preferably has the same characteristics as the initially used first hydrocarbon fluid. It should, however, be of sufficient purity so that any of such third hydrocarbon fluid that should remain with the solids after treatment has been completed will not impart to such solids concentrations of EPA listed materials above those allowed by relevant EPA rules and regulations. Thus, the third hydrocarbon fluids are hydrocarbons having from 2 to 9 carbon atoms, preferably from 2 to 4 carbon atoms, and may be aliphatic and cyclo-aliphatic. Examples of preferred fluids include propane, cyclopropane, propylene, butane, isobutane, cyclobutane,the butenes (e.g., butene-1, cis-butene-2, trans-butene-2), the butadienes (e.g., 1,3-butadiene), isobutylene and LPG. Examples of commercial grades of LPG that are useful include Commercial Propane, Commercial Butane, Commercial Propane-Butane Mixtures, Special Duty Propane and Propane HD-5. Mixtures of two or more of the foregoing fluids can be used. Propane, and commercial grades of LPG (e.g., Commercial Propane and Commercial Propane-Butane Mixtures) are particularly preferred.

The sludge to be treated is preferably pre-treated to remove some of the water and oil prior to treating the solids in accordance with the inventive process. In this pretreating step, raw sludge coming from various sources in the refinery system is advanced to one or more pretreatment units. The pretreatment units that are particularly useful include vacuum filters, belt presses, filter presses or a combination of the foregoing, the design of which are entirely conventional. An additional sludge dryer to further de-water the sludge can be used. The material coming off the pretreatment units are preferably placed in holding bins.

The sludge solids produced by the pretreatment units are conveyed to the contacting vessel. Conveyance to the contacting vessel can be by conveyor belt, screw conveyor, pneumatic equipment, in slurry form, in bags or baskets which are lowered into the contacting vessel, or by any other conventional means known in the art. A suitably designed gasketed filter press can serve as both the pretreatment unit and the contacting unit.

In an optional step, the pre-treated sludge solids can be mixed with one or more non-sludge materials to facilitate the formation of and/or insure the retention of a fluid-permeable mass or bed of sludge solids. The non-sludge materials that are useful are preferably selected from those materials having relatively low bulk densities when compared to the sludge solids and a structural integrity that does not degrade significantly when in contact with the hydrocarbon oils intermixed with the solids or the hydrocarbon fluids used in accordance with the inventive method. These non-sludge materials also preferably do not contain significant levels of EPA listed materials. Examples of the non-sludge materials that are useful include inorganic materials such as diatomaceous earth, vermiculite, pumice; organic materials such as saw dust, wood chips, straw, ground tree bark, ground corn cobs, de-oiled rice bran, oil seeds; and synthetic polymeric materials such as porous polypropylene beads, blown plastics (especially off-specification blown plastics) and the like. Polyelectrolyte polymer flocculating agents are also useful as the non-sludge material. Mixtures of two or more of the foregoing non-sludge materials can be used. The level of addition of non-sludge material to the sludge solids is typically in the range of zero to 50% by volume, preferably 5% to 20% by volume of the non-sludge material based on the volume of the sludge solids. This optional step of mixing the sludge solids with a non-sludge material can be effected in the pre-treatment unit or in the contactor using conventional mixing techniques.

The contacting unit can be one or more pressurized vessels that may be operated in a batch mode, semi-batch mode or in a continuous mode. When multiple vessels are employed, the vessels can be operated in parallel or in staggered sequence. The configuration of the vessel is dependent upon the means of solids conveyance to and from the vessel. For example, if solids are conveyed to the vessel in slurry form, nozzles with ball valves or pinch valves can satisfactorily seal the vessel. If solids are conveyed by large bag or basket, large diameter hatch closures can be used to satisfactorily provide closure of the vessel. For pneumatic conveyance of the product solids from the vessels, conventional designs including cone-shaped bottoms with manifolds of air-jet nozzles can be used. Continuous systems employing lock-hoppers or rotary valves can be used. The product solids can also be conveyed from the contacting vessel by slurrying the solids with water followed by an appropriate de-watering step using, for example, vacuum drum filters, clarifiers, settling tanks, centrifuges, sludge dryers. The solids can also be conveyed from the contacting vessel by slurrying them in liquid butane and then transferring the slurry to a low pressure lock hopper. The contacting vessels can employ mechanical agitators, and heating/cooling jackets as well as external thermal insulation.

The direction of flow of the driving fluids (i.e., first, second, and third hydrocarbon fluids) through the solids can be upwardly, downwardly or radially or it can alternate between any of the foregoing. While not wishing to be bound by theory, it is believed that the mechanism by which the driving fluids effect separation of the organic material from the solids involves (1) a sweeping action wherein the driving fluid advances through the mass or bed of particulate solids and displaces the organic material intermixed with such solids, and/or (2) an extraction wherein the organic material dissolves or disperses in the driving fluid and is carried away from the solids with such fluid. The term "drive" as used throughout the specification and in the appended claims refers to both of these mechanisms.

The contacting vessel effluent can be advanced directly to the appropriate refinery stream, or can be treated to separate oil in such effluent from the driving fluid. The oil is then advanced to the appropriate refinery stream and the driving fluid can be recycled. Separation can be accomplished by a number of means discussed in greater detail below including flashing and distillation.

One method for recycling the second hydrocarbon fluid employs a pump and a heater to pump the second hydrocarbon fluid through the contacting vessel until the desired bed temperature is reached. A heated storage tank is employed to store the contacting vessel fluid effluent. A continuous flash/distillation system separates the second hydrocarbon fluid from the undesirable residual organic materials. A cooler and separator are used to separate water from the second hydrocarbon fluid.

The contacting vessel is filled with solids conveyed from the pretreatment unit. These solids are intermixed with hydrocarbon oil and in most cases water. In applications wherein a slurry fill is used, the excess slurry solvent may be drained down. With other filling methods, an inert gas purge can be used. The contacting vessel is pressurized to the desired operating pressure, and condensed or partially condensed light hydrocarbon fluid is pumped into the contacting vessel and flows through the solids in said vessel. The temperature within the vessel is preferably in the range of 0°C (32°F) to 149°C (300°F), more preferably 4.5°C (45°F) to 109°C (220°F), most preferably 16°C (60°F) to 60°C (140°F). The pressure within the process is preferably in the range of 345-13790 kPag (50 to 2000 psig), more preferably 483-6895 kPag (70 to 1000 psig). The average contact time between the first hydrocarbon fluid and the solids is preferably in the range of 5 minutes to 24 hours, more preferably 5 minutes to 10 hours, and still more preferably 5 minutes to 5 hours. The first hydrocarbon fluid can be advanced through the particulate solids at a sufficient rate to expand the bed when the particulate solids are in the form of a fixed bed, or to fluidize the bed when the particulate solids are in the form of an agitated or fluidized bed. The temperature, pressure and flow rate of the first hydrocarbon fluid are set at levels so that preferably at least about 30% by weight, more preferably at least about 50% by weight, most preferably at least about 95% by weight of the fluid is in a condensed state. When in such a condensed state, the fluid should have a density in excess of 240 kg/m$^3$ (about 15 pounds per cubic foot), preferably in excess of 320 kg/m$^3$ (about 20 pounds per cubic foot), more preferably in excess of 400 kg/m$^3$ (about 25 pounds per cubic foot). When the fluid is propane, the upper limit is preferably 528 kg/m$^3$ (about 33 pounds per cubic foot). When the fluid is butane, the upper limit is preferably in the range of 560-640 kg/m$^3$ (35 to 40 pounds per cubic foot). The effluent from the contacting vessel preferably flows through a continuous on-line monitor, for example, an ultraviolet light absorption or ultraviolet light fluorescent detector which monitors the extent of removal of organic materials from the sludge.

Prior to the second step employing the second hydrocarbon fluid, the flow of the first hydrocarbon fluid into the contactor is stopped when the desired amount of hydrocarbon oil has been removed from the contactor and the first hydrocarbon fluid remaining in the vessel is removed from the vessel. The first hydrocarbon fluid can be removed by a number of conventional techniques including displacing the first hydrocarbon fluid with the second hydrocarbon fluid or an inert gas, or by draining the first hydrocarbon fluid from the contactor. The second hydrocarbon fluid is then introduced into the contactor and advanced through the solids in said contactor at an effective rate to drive the undesirable residual organic materials intermixed with said solids from said solids. The temperature within the contactor during this step of the process is preferably in the range of 0°C (32°F) to 204°C (400°F), more preferably 38°C (100°F) to 149°C (300°F), most preferably 38°C (100°F) to 121°C (250°F). The pressure within the contactor during this step of the process is preferably in the range of 100.7 kPag (atmospheric pressure) to 689.5 kPag (100 psig). The average contact time between the second hydrocarbon fluid and the solids is preferably in the range of 5 minutes to 24 hours, more preferably in the range of 5 minutes to 10 hours, and still more preferably in the range of 5 minutes to 5 hours. The second hydrocarbon fluid can be advanced through the particulate solids at a sufficient rate to expand the bed when the particulate solids are in the form of a fixed bed, or to fluidize the bed when the particulate solids are in the form of an agitated or fluidized bed. The temperature, pressure and flow rate of the second hydrocarbon fluid are set at levels so that preferably at least about 30% by weight, more preferably at least about 50% by weight, more preferably at least about 95% by weight of the fluid is in a condensed state.

At the completion of the second step of the process, the second hydrocarbon fluid is removed by displacing the second hydrocarbon fluid with the third hydrocarbon fluid. The third hydrocarbon fluid is advanced through the solids at a temperature that is preferably in the range of 0°C (32°F) to 149°C (300°F), more preferably 4.5°C (45°F) to 109°C (220°F), more preferably 16°C (60°F) to 60°C (140°F). The pressure within the contactor during this step of the process is preferably in the range of 345-13790 kPag (50 to 2000 psig), more preferably 483-6895 kPag (70 to 1000 psig). The average contact time between the third hydrocarbon fluid and the solids is preferably in the range of 5 minutes to 24 hours, more preferably 5 minutes to 10 hours, and still more preferably in the range of 5 minutes to 5 hours. The third hydrocarbon fluid can be advanced through the particulate solids at a sufficient rate to expand the bed when the particulate solids are in the form of a fixed bed, or to fluidize the bed when the particulate solids are in the form of an agitated or fluidized bed. The temperature, pressure and flow rate of the third hydrocarbon fluid are set at levels so that preferably at least about 30% by weight, more preferably at least about 50% by weight, more preferably at least about 95% by weight of the fluid is in a condensed state. When in such a condensed state, the fluid should have a density in excess of about 240 kg/m$^3$ (15 pounds per cubic foot), preferably in excess of about 320 kg/m$^3$ (20 pounds per cubic foot), more preferably in excess of about 400 kg/m$^3$ (25 pounds per cubic foot). When the fluid is propane, the upper limit is preferably about 528 kg/m$^3$ (33 pounds per cubic foot). When the fluid is butane, the upper limit is preferably in the range of 560 (35) to 640 kg/m$^3$ (40 pounds per cubic foot). The flow of the third hydrocarbon fluid through the contactor is continued until a desired amount of the second hydrocarbon fluid is removed from the solids. Upon completion of the removal of the second hydrocarbon fluid, the third hydrocarbon fluid is then removed. The third hydrocarbon fluid can be removed using a number of conventional techniques including displacing the third hydrocarbon fluid with an inert gas or by draining the third hydrocarbon fluid from the contactor and then depressurizing the contactor. The solids are then removed from the contactor vessel using the techniques discussed above. The solids that are removed can be disposed of using conventional solids disposal techniques.

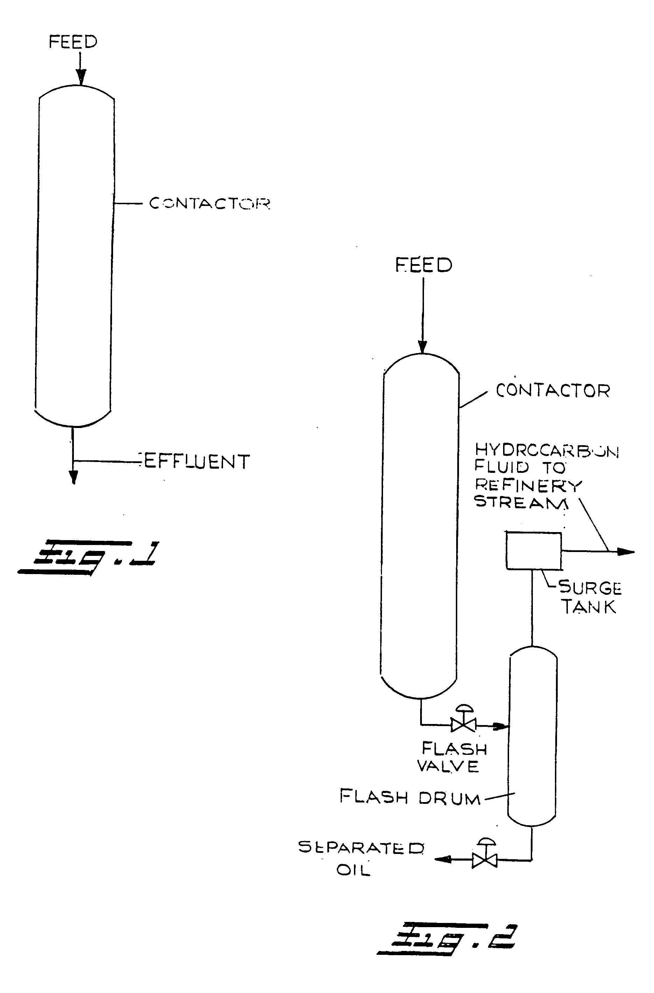

In order to further illustrate the inventive process, reference is made to the drawings and initially to Fig. 1. Fig. 1 is a flow sheet illustrating the first step of the inventive process wherein the effluent stream from the contactor is returned directly to the refinery system. The sludge to be treated is preferably pretreated as discussed above and the resulting partially de-oiled and de-watered solids are placed in the contactor vessel. The first hydrocarbon fluid is introduced into the contactor vessel and advanced downwardly through the solids in the contactor vessel. The downward flow of the first hydrocarbon fluid through the solids in the contactor vessel drives the hydrocarbon oil that is intermixed with the solids downwardly through the contactor vessel to and through an outlet in the bottom of the contactor vessel. The effluent from the contactor, which comprises a mixture of separated hydrocarbon oil and the first hydrocarbon fluid, is then returned to an appropriate location in the refinery system (e.g., the crude tower) for further processing. Most of the water that is intermixed with the solids remains behind with the solids.

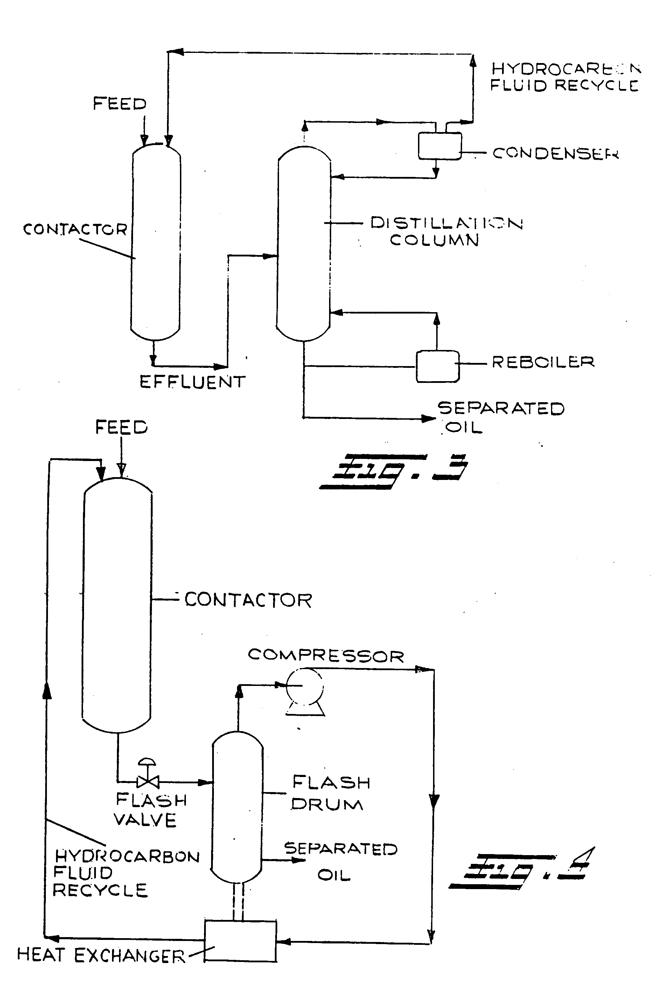

Fig. 2 is a flow sheet illustrating the first step of the operation of the inventive process using a contactor vessel, flash valve, flash drum and surge tank. The sludge to be treated is preferably pretreated as discussed above and the resulting partially de-oiled and de-watered solids are placed in the contactor vessel. The contactor vessel is pressurized to the desired operating pressure by introducing the first hydrocarbon fluid into the contactor vessel and adjusting the flow rates through the compressor and the flash valve. The first hydrocarbon fluid is advanced downwardly through the solids in the contactor vessel. The downward flow of the first hydrocarbon fluid drives the oil that is intermixed with the solids downwardly through the contactor vessel to and through an opening in the bottom of the contactor vessel and through a conduit to the flash valve. The effluent stream that is advanced to the flash valve comprises a mixture of hydrocarbon oil and the first hydrocarbon fluid. The flash valve is opened to permit the flow of the effluent stream to the flash drum. Most of the water that is intermixed with the solids remains behind in the contactor vessel with the solids. In the flash drum the first hydrocarbon fluid flashes and separates from the oil. The separated oil is removed from flash drum and advanced to the refinery system for further processing. The first hydrocarbon fluid is advanced to the surge tank where it is collected and then returned to an appropriate location in the refinery system (e.g., refinery fuel gas system).

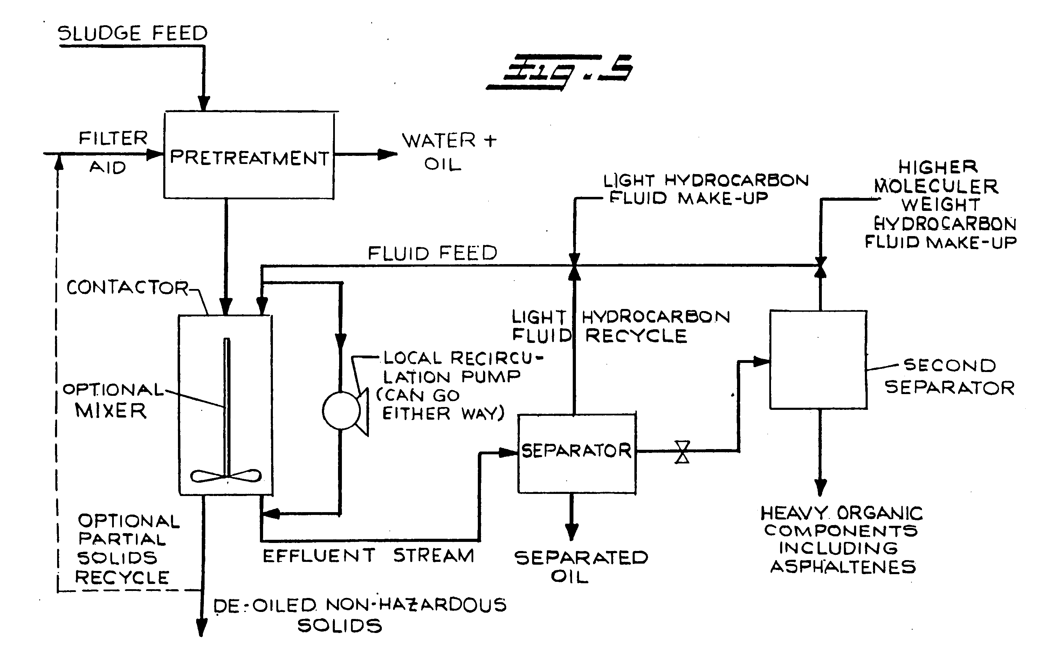

Fig. 3 is a flow sheet illustrating the first step of the operation of the inventive process using a contactor and a distillation column. The sludge to be treated is preferably pretreated as discussed above and the resulting partially de-oiled and de-watered solids are placed in the contactor vessel. The first hydrocarbon fluid is advanced downwardly through the contactor vessel. The downward flow of the first hydrocarbon fluid through the solids drives the hydrocarbon oil that is intermixed with the solids downwardly through the contactor vessel to and through an opening in the bottom of the contactor vessel and then through a conduit to the distillation column. The effluent stream that is advanced to the distillation column comprises a mixture of the separated hydrocarbon oil and the first hydrocarbon fluid. The hydrocarbon oil and the first hydrocarbon fluid are separated in the distillation column using conventional distillation techniques. The first hydrocarbon fluid that emerges from the distillation column is recycled to the contactor. The separated oil that emerges from the distillation column is advanced to the refinery system for further processing.

Fig. 4 is a flow sheet illustrating the first step of the operation of the inventive process using a contactor vessel, flash drum, compressor and heat exchanger. The sludge to be treated is preferably pretreated as discussed above and the resulting partially de-oiled and de-watered solids are placed in the contactor vessel. The contactor vessel is pressurized to the desired operating pressure by introducing the first hydrocarbon fluid into the contactor vessel and adjusting the flow rates through the compressor and the flash valve. The first hydrocarbon fluid is advanced downwardly through the solids in the contactor vessel. The downward flow of the first hydrocarbon fluid drives the hydrocarbon oil that is intermixed with the solids downwardly through the contactor vessel to and through an opening in the bottom of the contactor vessel and then through a conduit to the flash valve. The effluent stream that is advanced to the flash valve comprises a mixture of hydrocarbon oil and the first hydrocarbon fluid. The flash valve is opened to permit the flow of the effluent to the flash drum. Most of the water that is intermixed with the solids remains behind in the contactor vessel with the solids. In the flash drum, the first hydrocarbon fluid flashes and separates from the hydrocarbon oil. The separated hydrocarbon oil is removed from the flash drum and advanced to the refinery system for further processing. The first hydrocarbon fluid vaporizes in the flash drum, and is advanced through a conduit to the compressor wherein it is compressed. The compressed fluid is advanced to and through the heat exchanger and then back to the contactor. In the heat exchanger, heat is transferred from the first hydrocarbon fluid to the flash drum.

Fig. 5 is a process flow sheet illustrating the inventive process wherein the sludge to be treated is initially contacted with the first hydrocarbon fluid and then subsequently contacted with the second hydrocarbon fluid and third hydrocarbon fluid. In this embodiment of the inventive process, there is employed a pretreatment unit, contactor, separator and second separator. The sludge to be treated is advanced to the pretreatment unit wherein water and oil are partially removed. A conventional filter aid is preferably used to enhance the separation. From the pretreatment unit, partially de-watered and de-oiled solids are advanced to the contactor. In the contactor, the solids are initially contacted with the first hydrocarbon fluid under the conditions of temperature, pressure and flow rate discussed above. An agitator is provided in the contactor for mixing purposes; mixing is optional and used to prevent the formation of undesirable channels and the like in the solids bed. The effluent stream emerging from the contactor contains hydrocarbon oil and first hydrocarbon fluid. Most of the water that is intermixed with the solids remains in the contactor. The effluent stream is advanced to the first separator wherein the first hydrocarbon fluid and hydrocarbon oil are separated using conventional techniques. Separation can be effected, for example, by flashing the first hydrocarbon fluid in a flash tank. The separated oil is advanced to the refinery system for further processing. The first hydrocarbon fluid is recirculated to the contactor. Once the desired level of removal of hydrocarbon oil is achieved using the first hydrocarbon fluid, undesirable residual organic materials (e.g., heavy residual hydrocarbons containing asphaltenes) may remain intermixed with the solids in the contactor. These undesirable residual organic materials can be removed by advancing the second hydrocarbon fluid through the contactor under the conditions of temperature, pressure and flow rate

7

discussed above. The effluent stream from the contactor during this step of the process contains a mixture of hydrocarbon oil, undesirable residual organic materials and the second hydrocarbon fluid. This effluent stream is advanced to the separator wherein hydrocarbon oil is separated using conventional techniques. The remaining mixture of second hydrocarbon fluid and undesirable residual organic materials is advanced to the second separator to separate out the undesirable residual organic materials. This separation can be effected using conventional techniques (e.g., distillation). Once the undesirable residual organic materials are removed from the solids in the contactor, a third hydrocarbon fluid is advanced through the contactor under the conditions of pressure, temperature and flow rate discussed above to drive any residual second hydrocarbon fluid that may have remained intermixed with the solids in the contactor from such solids. Upon completion of this step of the process, the third hydrocarbon fluid is preferably removed by any of a number of conventional techniques including displacing the third hydrocarbon fluid with an inert gas or by draining the third hydrocarbon fluid from the contactor. The process also provides for a local fluidpump-around that can be optionally used prior to any of the fluid/solids contacting steps of the process, and/or recycling of the solids to increase the degree of separation of hydrocarbon oil from the solids. Upon completion of the inventive process, the solids are removed from the contactor and disposed of using conventional solids disposal techniques.

Of the following examples, example 5 is illustrative of the process of the present invention. Examples 1-4 and 6 are comparison examples. Unless otherwise indicated, in the following examples as well as throughout the entire specification and in the appended claims, all parts and percentages are by weight, and all temperatures are in degrees celsius (Fahrenheit).

In the following examples the apparatus that was used included a reservoir for liquified propane which was connected via a conduit to a pump system consisting of a pump, reservoir and back pressure regulator. A conduit from the reservoir extended to a conduit manifold for connecting the propane conduit to either the top or the bottom of the contactor vessels. A pressure transducer was positioned in the propane conduit downstream of the reservoir but upstream from the manifold. A metering pump fed an aromatics-enriched fluid to the propane conduit downstream of the pressure transducer, but upstream of the manifold. One of two stainless steel contactor vessels were used. Contactor vessel No. 1 had an internal diameter of 38mm (1.5 inches) and a length of 330mm (13 inches). Contactor vessel No. 2 had an internal diameter of 96mm (3.75 inches) and a length of 356mm (14 inches). Each of the contactors were equipped with an internal thermocouple. A temperature control system was mounted around the contactor vessels. A conduit extended from these contactor vessels to a flash vessel separator. A back pressure regulator was positioned in this conduit. A flash valve was also located in this conduit downstream of the back pressure regulator. A heat exchanger was positioned in this conduit downstream of the flash valve but upstream of the flash vessel separator. A conduit extended from the flash vessel separator to an exhaust vent. A dry test meter was placed in this conduit downstream from the flash vessel separator to monitor gases leaving the flash vessel. The flash vessel separator had a drain in its bottom for removing liquids. An electronic timer was used to monitor flow rates.

The following procedure was used for each of the examples discussed below. A weighed amount of sludge feed material was loaded into one of the contactor vessels. The contactor vessel was sealed, connected to the test system and purged with an inert gas. The contactor temperature was adjusted to the desired level. Fluid flow rate was controlled by the flash valve. The flash valve effluent flowed through the heat exchanger and liquid products collected in the bottom of the flash vessel while vaporized gases flowed through the dry test meter. By monitoring the amount of liquid products as a function of fluid flow and time, the process kinetics were determined. Treated solids were emptied from the contactor vessel and analyzed. The following partially de-watered feed sludges were tested:

TABLE I

|  | Wt. % Hydrocarbon | Wt. % Water | Wt. % Solids |
|---|---|---|---|
| Vacuum Filter Cake A | 19 | 42 | 39 |
| Filter Press Cake B | 17 | 32 | 51 |
| Belt Press Cake C | 18 | 58 | 24 |

In each of these cases, the cakes were self-adhering, dark in color, and had a noxious odor.

Example 1

1411 grams of vacuum filter cake A were charged to contactor vessel No. 2. 4200 grams of propane were advanced downwardly through the contactor over a period of 60 minutes. The temperature within the contactor was 15.5°C (80°F). The pressure was 1000 kPag (145 psig). The propane was flashed from the effluent stream and 256 grams of oil were collected. No water was observed in the collected oil. The separated oil had an initial boiling point of 140°C (284°F), a final boiling point of 467°C (872°F) and 75% by weight of the oil had a boiling point below 371°C (700°F). The oil consisted of 40% saturates, 57% aromatics and 3% resin. A gas chromatograph examination of the oil indicated a complex mixture of hydrocarbons, including one peak occurring at the retention time of chrysene, in addition to other heavy aromatic peaks. The oil had an iron content of 10 ppm, and less than 0.8 ppm of nickel and vanadium. The product solids were lighter in color and more free-flowing than the feed sludge. The product solids contained about 1.2% by weight (based on the weight of the product solids) of a black, hexane insoluble, heavy organic, tar-like material.

Example 2

135.72 grams of vacuum filter cake A were charged to contactor vessel No. 1 and contacted with 393.6 grams of propane over a period of 90 minutes. The temperature within the contactor was 23°C (73.4°F) and the pressure was 896 kPag (130 psig). The product solids contained about 1.2% by weight of organic material which could be extracted with toluene at 79-110°C (175-230°F). The separated oil contained virtually no water. The product solids were lighter in color and more free-flowing than the feed material.

Example 3

1408 grams of vacuum filter cake A were charged to contactor vessel No. 2 and contacted with 3414 grams of propane over a period of 90 minutes. The propane flow was downwardly through the contactor the temperature was 30°C (86°F) and the pressure was 1035 kPag (150 psig.) The product solids contained about 1.2% by weight of an organic material which could be extracted with toluene at 79-110°C (175-230°F). The separated oil contained virtually no water. The feed material as well as the product solids were analyzed for various organic including EPA listed hazardous materials, with the results being as follows:

| Compound | Feed, ppm | Product, ppm |
|---|---|---|
| benzene | 62 | 0.036 |
| 1,2-dichloroethane | < 2 | < 0.035 |
| methyl ethyl ketone | < 40 | < 0.070 |
| ethyl benzene | 77 | < 0.035 |
| toluene | 350 | 0.068 |
| xylene, m | 200 | < 0.035 |
| xylenes, o, p | 170 | 0.180 |
| benzo(b)fluoranthene | < 10 | < 1.200 |
| chrysene | 52 | 2.400 |
| dibenz(a,h)anthracene | < 10 | < 1.200 |
| benzo(a)pyrene | < 10 | < 1.2 |
| fluoranthene | 32 | < 1.2 |
| indene | < 10 | < 1.2 |
| 1-methylnaphthalene | 570 | 3.9 |
| naphthalene | 190 | 3.1 |
| phenanthrene | 420 | 7.0 |
| pyrene | 180 | 3.5 |
| quinoline | < 100 | < 1.2 |
| selenium | 0.150 | 0.036 |

Example 4

2045 grams of filter press cake B were charged to contactor vessel No. 2 and contacted with 7094 grams of liquid propane over a period of 90 minutes. The temperature within the contactor was 15.5°C (80°F), and the pressure was 1000 kPag (145 psig). The product solids were lighter in color and more free

flowing than the feed material. The product solids contained about 2.4% by weight heavy residual hydrocarbons including asphaltene. The separated oil contained virtually no water.

Example 5

113.0 grams of vacuum filter cake A were charged to contactor vessel No. 1 and contacted with 250 grams of liquid propane at a temperature of 23°C (73.4°F) and a pressure of 896 kPag (130 psig). The direction of flow of the propane was downward. The propane was then drained from the contactor, and the contactor was depressurised. The contactor vessel and solids were heated to a temperature of 85°C (185°F). 303 grams of toluene at a temperature of 85-110°C (185-230°F) were advanced upwardly through the solids over a period of 90 minutes. The temperature of the solids and the effluent stream ranged from 85-110°C (185 to 230°F). The pressure of the system was maintained at 345°C (50 psig). The toluene extracted both heavy residual hydrocarbons including asphaltenes and water. The effluent stream was cooled to ambient temperature. A clear water phase separated from the organic phase. The contactor vessel was cooled and drained of toluene. 250 grams of liquid propane were advanced downwardly through the solids in the contactor vessel at a temperature of 23°C (73.4°F) to remove residual toluene. The pressure within the contactor vessel was 896 kPag (130 psig). The product solids contained less than 0.2% by weight heavy residual hydrocarbons including asphaltenes, and had a water content lower than the water content of the feed. The feed material as well as the product solids were analyzed for various organics including EPA listed hazardous materials, with the results being as follows:

| Compound | Feed, ppm | Product, ppm |
|---|---|---|
| benzo(b)fluoranthene | < 10 | < 0.40 |
| chrysene | 52 | 0.36 |
| dibenz(a,h)anthracene | < 10 | < 0.20 |
| benzo(a)pyrene | < 10 | 0.24 |
| fluoranthene | 32 | < 0.20 |
| indene | < 10 | < 0.20 |
| 1-methylnaphthalene | 570 | 0.38 |
| naphthalene | 190 | 0.35 |
| phenanthrene | 420 | 0.42 |
| quinoline | < 100 | < 0.40 |

Example 6

681 grams of belt press cake C were charged to contactor vessel No. 2 and contacted with 1799 grams of propane over a period of 90 minutes. The propane flow was downwardly through the contactor. The temperature within the contactor was 22°C (71°F) and the pressure was 862 kPag (125 psig). The propane was flashed from the effluent stream and 54 grams of separated oil were collected. 616 grams of solid were dried at a temperature of 105°C (221°F) to a 3% by weight moisture content and then contacted with 1436 grams of propane over a period of 90 minutes. The direction of flow of propane was downwardly through the contactor, the temperature was 24°C (77°F) and the pressure was 241 kPag (135 psig). The propane was flashed from the effluent stream and 88 grams of oil were collected in six sequential fractions. The final oil fraction was analyzed and found to have characteristics comparable to those of a Fluid Catalytic Cracker decant oil.

An advantage of this invention is that an efficient, economical and reliable process is provided for treating refinery sludges and the like to render the product solids from such process delistable and/or to facilitate additional handling and treatment of the solids, e.g., treatment by cementing to prevent metals leaching. An additional advantage is that this process is adaptable to treating other solid and hazardous wastes as well as other materials such as catalyst fines-containing streams (e.g., decanter oil streams from fluid catalytic cracking units), oil-contaminated drill cuttings, steel mill scale, bleaching clay.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

**Claims**

1. A process for separating hydrocarbon oil and heavy residual organics from a feed composition comprising solids intermixed with said hydrocarbon oil and heavy residual organics, said heavy residual organics having higher boiling points than said hydrocarbon oil, said process comprising the steps of:

(1) contacting said feed composition with a first hydrocarbon fluid of from 2 to 9 carbon atoms for an effective period of time to extract at least part of said hydrocarbon oil from said feed composition and form a first separatable phase comprising said hydrocarbon oil and said first hydrocarbon fluid, and separating at least part of said first separatable phase from said feed composition to provide a first intermediate composition;

(2) contacting said first intermediate composition from step (1) with a second hydrocarbon fluid for an effective period of time to extract at least part of said heavy residual organics from said first intermediate composition and form a second separatable phase comprising said second hydrocarbon fluid and said heavy residual organics, said second hydrocarbon fluid being capable of dissolving said heavy residual organics at a temperature in the range of 30°F (-1°C) to 400°F (204°C) and a pressure below about 500 psig (3,450 kPag), and separating at least part of second separatable phase from said first intermediate composition to provide a second intermediate composition, at least part of said second hydrocarbon fluid remaining in said second intermediate composition; and

(3) contacting said second intermediate composition from step (2) with a third hydrocarbon fluid of from 2 to 9 carbon atoms for an effective period of time to extract at least part of said second hydrocarbon fluid from said second intermediate composition and form a third separatable phase comprising said third hydrocarbon fluid and said second hydrocarbon fluid, and separating at least part of said third separatable phase from said second intermediate composition to provide a treated product.

2. A process as claimed in claim 1 characterised in that the composition further comprises water.

3. A process as claimed in claim 1 characterised in that the composition comprises solid waste.

4. A process as claimed in claim 1 characterised in that the composition comprises hazardous waste.

5. A process as claimed in claim 1 characterised in that the composition comprises petroleum waste.

6. A process as claimed in claim 1 characterised in that the composition comprises refinery sludge.

7. A process as claimed in any of claims 1 to 6 characterised in that the first and third hydrocarbon fluid comprises an aliphatic or cycloaliphatic hydrocarbon of from 2 to 9 carbon atoms, preferably from 2 to 4 carbon atoms, and in particular comprises a liquified petroleum gas, propane, cyclopropane, propylene, butane, isobutane, cyclobutane, a butane, a butadiene, isobutylene, or a mixture of two or more thereof.

8. A process as claimed in claim 7 characterised in that the first and third hydrocarbon fluid comprises propane or a liquified petroleum gas.

9. A process as claimed in any of claims 1 to 8 characterised in that at least 30%, preferably 50%, and in particular 95% by weight, of said first and third hydrocarbon fluid is in a condensed state.

10. A process as claimed in any of claims 1 to 9 characterised in that the first and third hydrocarbon fluid is at a temperature in the range of 32°F (0°C) to 300°F (148°C), preferably in the range of 45°F (4.5°C) to 220°F (109°C), in particular in the range of 60°F (16°C) to 140°F (60°C).

11. A process as claimed in any of claims 1 to 10 characterised in that the first and third hydrocarbon fluid is at a pressure in the range of 50 to 2000 psig (345-13,790 kPag), preferably in the range of 70 to 1000 psig (483-6,895 kPag).

12. A process as claimed in any of claims 1 to 10 characterised in that the average contact time between the first and third hydrocarbon fluid and the particulate solids is from 5 minutes to 24 hours, preferably from 5 minutes to 10 hours, and in particular from 5 minutes to 5 hours.

13. A process as claimed in any of claims 1 to 12 characterised in that the second hydrocarbon fluid comprises at least one aromatic compound preferably benzene, toluene, xylene, or a mixture of two or more thereof.

14. A process as claimed in any of claims 1 to 13 characterised in that the second hydrocarbon fluid is at a temperature in the range of 32°F (0°C) to 400°F (204°C), preferably in the range of 100°F (38°C) to 300°F (149°C), in particular in the range of 100°F (38°C) to 250°F (121°C).

15. A process as claimed in any of claims 1 to 14 characterised in that the second hydrocarbon fluid is at a pressure in the range of atmospheric pressure to 100 psig (100.7-689.5 kPag).

16. A process as claimed in any of claims 1 to 15 characterised in that the average contact time between the second hydrocarbon fluid and the particulate solids is from 5 minutes to 24 hours, preferably from 5 minutes to 10 hours, and in particular from 5 minutes to 5 hours.

17. A process as claimed in any of claims 1 to 16 characterised in that the first hydrocarbon fluid and the third hydrocarbon fluid are the same.

18. A process as claimed in any of claims 1 to 17 characterised in that the first hydrocarbon fluid and the third hydrocarbon fluid each comprise propane.

19. A process as claimed in any of claims 1 to 18 characterised in that at least 30%, preferably 50%, and in particular 95% by weight, of the second hydrocarbon fluid is in a condensed state.

20. A process as claimed in any of claims 1 to 19 characterised in that the second hydrocarbon fluid is derived from an aromatic-enriched refinery stream.

21. A process as claimed in any of claims 1 to 20 characterised in that the second hydrocarbon fluid comprises a reformate fluid.

22. A process as claimed in any of claims 1 to 21 including the steps of driving the particulate solids to a contactor unit prior to advancing the first hydrocarbon fluid through the solids, removing the solids from the contactor unit after driving the third hydrocarbon fluid through the solids, and recycling at least part of the solids back into the contactor vessel.

23. A process as claimed in any of claims 1 to 22 including the steps of mixing the solids with a non-sludge material prior to driving the first hydrocarbon fluid through the solids.

24. A process as claimed in claim 1 for separating hydrocarbon oil and heavy residual organics from a feed composition comprising solids intermixed with said hydrocarbon oil and heavy residual organics, said heavy residual organics having higher boiling points than said hydrocarbon oil, said process comprising the steps of:

(1) contacting said feed composition with a first hydrocarbon fluid of from 2 to 4 carbon atoms for an effective period of time to extract at least part of said hydrocarbon oil from said feed composition and form a first separatable phase comprising said hydrocarbon oil and said first hydrocarbon fluid, and separating at least part of said

first separatable phase from said feed composition to provide a first intermediate composition;

(2) contacting said first intermediate composition from step (1) with a second hydrocarbon fluid comprising at least one aromatic compound for an effective period of time to extract at least part of said heavy residual organics from said first intermediate composition and form a second separatable phase comprising said second hydrocarbon fluid and said heavy residual organics, and separating at least part of said second separatable phase from said first intermediate composition to provide a second intermediate composition, at least part of said second hydrocarbon fluid remaining in said second intermediate composition; and

(3) contacting said second intermediate composition from step (2) with a third hydrocarbon fluid of from 2 to 4 carbon atoms for an effective period of time to extract at least part of said second hydrocarbon fluid from said second intermediate composition and form a third separatable phase comprising said second hydrocarbon fluid and said third hydrocarbon fluid, and separating at least part of said third separatable phase from said second intermediate composition to provide a treated product.

25. A process as claimed in claim 1 characterised in that said first hydrocarbon fluid and said third hydrocarbon fluid each comprise propane, and said second hydrocarbon fluid comprises benzene, toluene, o-xylene, m-xylene, p-xylene or a mixture of two or more thereof.

**Revendications**

1. Procédé de séparation d'huile d'hydrocarbures et de produits organiques résiduels lourds à partir d'une composition d'alimentation comprenant des solides mélangés avec ladite huile d'hydrocarbures et lesdits produits organiques résiduels lourds, lesdits produits organiques résiduels lourds ayant des points d'ébullition plus élevés que ladite huile d'hydrocarbures, ledit procédé comprenant les étapes de:

   (1) mise en contact de ladite composition d'alimentation avec un premier fluide d'hydrocarbures de 2 à 9 atomes de carbone pendant une durée efficace pour extraire au moins une partie de ladite huile d'hydrocarbures de ladite composition d'alimentation et former une première phase séparable comprenant ladite huile d'hydrocarbures et ledit premier fluide d'hydrocarbures, et séparation d'au moins une partie de ladite première phase séparable de ladite composition d'alimentation pour fournir une première composition intermédiaire;

   (2) mise en contact de ladite première composition intermédiaire provenant de l'étape (1) avec un deuxième fluide d'hydrocarbures pendant une durée efficace pour extraire au moins une partie desdits produits organiques résiduels lourds de ladite première composition intermédiaire et former une deuxième phase séparable comprenant ledit deuxième fluide d'hydrocarbures et lesdits produits organiques résiduels lourds, ledit deuxième fluide d'hydrocarbures étant apte à dissoudre lesdits produits organiques résiduels lourds à une température dans la plage de -1°C (30°F) à 204°C (400°F) et sous une pression inférieure à environ 3450 kPag (500 psig), et séparation d'au moins une partie de la deuxième phase séparable de ladite première composition intermédiaire pour fournir une deuxième composition intermédiaire, au moins une partie dudit deuxième fluide d'hydrocarbures restant dans ladite deuxième composition intermédiaire; et

   (3) mise en contact de ladite deuxième composition intermédiaire provenant de l'étape (2) avec un troisième fluide d'hydrocarbures de 2 à 9 atomes de carbone pendant une durée efficace pour extraire au moins une partie dudit deuxième fluide d'hydrocarbures de ladite deuxième composition intermédiaire et former une troisième phase séparable comprenant ledit troisième fluide d'hydrocarbures et ledit deuxième fluide d'hydrocarbures, et séparation d'au moins une partie de ladite troisième phase séparable de ladite deuxième composition intermédiaire pour fournir un produit traité.

2. Procédé selon la revendication 1, caractérisé en ce que la composition comprend de plus de l'eau.

3. Procédé selon la revendication 1, caractérisé en ce que la composition comprend un rejet solide.

4. Procédé selon la revendication 1, caractérisé en ce que la composition comprend un rejet dangereux.

5. Procédé selon la revendication 1, caractérisé en ce que la composition comprend un rejet de pétrole.

6. Procédé selon la revendication 1, caractérisé en ce que la composition comprend une boue de raffinage.

7. Procédé selon l'une quelconque des revendications 1 à 6, caractérisé en ce que le premier et le troisième fluide d'hydrocarbures comprennent un hydrocarbure aliphatique ou cycloaliphatique de 2 à 9 atomes de carbone, de préférence de 2 à 4 atomes de carbone, et en particulier comprennent un gaz de pétrole liquéfié, le propane, le cyclopropane, le propylène, le butane, l'isobutane, le cyclobutane, un butane, un butadiène, l'isobutylène, ou un mélange de deux ou plusieurs de ceux-ci.

8. Procédé selon la revendication 7, caractérisé en ce que le premier et le troisième fluide d'hydrocarbures comprennent le propane ou un gaz de pétrole liquéfié.

9. Procédé selon l'une quelconque des revendications 1 à 8, caractérisé en ce qu'au moins 30%, de préférence 50%, et en particulier 95% en poids, desdits premier et troisième fluides d'hydrocarbures sont dans un état condensé.

10. Procédé selon l'une quelconque des revendications 1 à 9, caractérisé en ce que le premier et le troisième fluide d'hydrocarbures sont à une température dans la plage de 0°C (32°F) à 148°C (300°F), de préférence dans la plage de 4,5°C (45°F) à 109°C (220°F), en particulier dans la plage de 16°C (60°F) à 60°C (140°F).

11. Procédé selon l'une quelconque des revendications 1 à 10, caractérisé en ce que le premier et le troisième fluide d'hydrocarbures sont à une pression dans la plage de 345 à 13 790 kPag (50 à 2 000 psig), de préférence dans la plage de 483 à 6 895 kPag (70 à 1 000 psig).

12. Procédé selon l'une quelconque des revendications 1 à 10, caractérisé en ce que la durée moyenne de contact entre le premier et le troisième fluide d'hydrocarbures et les solides particulaires est de 5 minutes à 24 heures, de préférence de 5 minutes à 10 heures, et en particulier de 5 minutes à 5 heures.

13. Procédé selon l'une quelconque des revendications 1 à 12, caractérisé en ce que le deuxième fluide d'hydrocarbures comprend au moins un composé aromatique de préférence le benzène, le toluène, un xylène, ou un mélange de deux ou plusieurs de ceux-ci.

14. Procédé selon l'une quelconque des revendications 1 à 13, caractérisé en ce que le deuxième fluide d'hydrocarbures est à une température dans la plage de 0°C (32°F) à 204°C (400°F), de préférence dans la plage de 38°C (100°F) à 149°C (300°F), en particulier dans la plage de 38°C (100°F) à 121°C (250°F).

15. Procédé selon l'une quelconque des revendications 1 à 14, caractérisé en ce que le deuxième fluide d'hydrocarbures est à une pression dans la plage de 100,7 à 689,5 kPag (de la pression atmosphérique à 100 psig).

16. Procédé selon l'une quelconque des revendications 1 à 15, caractérisé en ce que la durée moyenne de contact entre le deuxième fluide d'hydrocarbures et les solides particulaires est de 5 minutes à 24 heures, de préférence de 5 minutes à 10 heures, et en particulier de 5 minutes à 5 heures.

17. Procédé selon l'une quelconque des revendications 1 à 16, caractérisé en ce que le premier fluide d'hydrocarbures et le troisième fluide d'hydrocarbures sont identiques.

18. Procédé selon l'une quelconque des revendications 1 à 17, caractérisé en ce que le premier fluide d'hydrocarbures et le troisième fluide d'hydrocarbures comprennent chacun du propane.

19. Procédé selon l'une quelconque des revendications 1 à 18, caractérisé en ce qu'au moins 30%, de préférence 50%, et en particulier 95% en poids, du deuxième fluide d'hydrocarbures sont dans un état condensé.

20. Procédé selon l'une quelconque des revendications 1 à 19, caractérisé en ce que le deuxième fluide d'hydrocarbures est extrait d'un courant de raffinerie enrichi en produits aromatiques.

21. Procédé selon l'une quelconque des revendications 1 à 20, caractérisé en ce que le deuxième fluide d'hydrocarbures est constitué d'un fluide de reformage.

22. Procédé selon l'une quelconque des revendications 1 à 21, comprenant les étapes de conduire les solides particulaires vers une unité de mise en contact avant de pousser le premier fluide d'hydrocarbures à travers les solides, éliminer les solides de l'unité de mise en contact après avoir conduit le troisième fluide d'hydrocarbures à travers les solides, et recyclage d'au moins une partie des solides en retour dans la cuve de mise en contact.

EP 0 260 064 B1

23. Procédé selon l'une quelconque des revendications 1 à 22, comprenant les étapes de mélange des solides avec un matériau non-boueux avant la conduite du premier fluide d'hydrocarbures à travers les solides.

24. Procédé selon la revendication 1 de séparation d'une huile d'hydrocarbures et de produits organiques résiduels lourds à partir d'une composition d'alimentation comprenant des solides mélangés avec ladite huile d'hydrocarbures et lesdits produits organiques résiduels lourds, lesdits produits organiques résiduels lourds ayant des points d'ébullition plus élevés que ladite huile d'hydrocarbures, ledit procédé comprenant les étapes de:

(1) mise en contact de ladite composition d'alimentation avec un premier fluide d'hydrocarbures de 2 à 4 atomes de carbone pendant une durée efficace pour extraire au moins une partie de ladite huile d'hydrocarbures de ladite composition d'alimentation et former une première phase séparable comprenant ladite hui le d'hydrocarbures et ledit premier fluide d'hydrocarbures, et séparation d'au moins une partie de ladite première phase séparable de ladite composition d'alimentation pour fournir une première composition intermédiaire;

(2) mise en contact de la première composition intermédiaire provenant de l'étape (1) avec un deuxième fluide d'hydrocarbures comprenant au moins un composé aromatique pendant une durée efficace pour extraire au moins une partie desdits produits organiques résiduels lourds de ladite première composition intermédiaire et former une deuxième phase séparable comprenant ledit deuxième fluide d'hydrocarbures et lesdits produits organiques résiduels lourds, et séparation d'au moins une partie de ladite deuxième phase séparable de ladite première composition intermédiaire pour fournir une deuxième composition intermédiaire, au moins une partie dudit deuxième fluide d'hydrocarbures restant dans ladite deuxième composition intermédiaire; et

(3) mise en contact de ladite deuxième composition intermédiaire provenant de l'étape (2) avec un troisième fluide d'hydrocarbures de 2 à 4 atomes de carbone pendant une durée efficace pour extraire au moins une partie dudit deuxième fluide d'hydrocarbures de ladite deuxième composition intermédiaire et former une troisième phase séparable comprenant ledit deuxième fluide d'hydrocarbures et ledit troisième fluide d'hydrocarbures, et séparation d'au moins une partie de ladite troisième phase séparable de ladite deuxième composition intermédiaire pour fournir un produit traité.

25. Procédé selon la revendication 1, caractérisé en ce que ledit premier fluide d'hydrocarbures et ledit troisième fluide d'hydrocarbures comprennent chacun le propane, et que ledit deuxième fluide d'hydrocarbures comprend le benzène, le toluène, l'o-xylène, le m-xylène, le p-xylène ou un mélange de deux ou plusieurs de ceux-ci.

**Patentansprüche**

1. Verfahren zur Trennung von Kohlenwasserstofföl und schweren organischen Rückständen aus einer Einsatzmaterialzusammensetzung, umfassend Feststoffe im Gemisch mit dem Kohlenwasserstofföl und den schweren organischen Rückständen, wobei die schweren organischen Rückstände höhere Siedepunkte als das Kohlenwasserstofföl aufweisen, wobei das Verfahren die folgenden Stufen umfaßt:

(1) Kontaktieren der Einsatzmaterialzusammensetzung mit einer ersten Kohlenwasserstoffflüssigkeit mit 2 bis 9 Kohlenstoffatomen für einen ausreichenden Zeitraum, um wenigstens ein Teil des Kohlenwasserstofföls aus der Einsatzmaterialzusammensetzung zu extrahieren und eine erste abtrennbare Phase zu bilden, die das Kohlenwasserstofföl und die erste Kohlenwasserstoffflüssigkeit umfaßt, sowie Abtrennen von zumindest einem Teil der ersten abtrennbaren Phase aus der Einsatzmaterialzusammensetzung, um zu einer ersten Zwischenproduktzusammensetzung zu gelangen;

(2) Kontaktieren der ersten Zwischenproduktzusammensetzung aus Stufe (1) mit einer zweiten Kohlenwasserstoffflüssigkeit für einen ausreichenden Zeitraum, um wenigstens einen Teil der schweren organischen Rückstände aus der ersten Zwischenproduktzusammensetzung zu extrahieren und eine zweite abtrennbare Phase zu bilden, umfassend die zweite Kohlenwasserstoffflüssigkeit und die schweren organischen Rückstände, wobei die zweite Kohlenwasserstoffflüssigkeit in der Lage ist, die schweren organischen Rückstände bei einer Temperatur im Bereich von 30 °F (- 1 °C) bis 400 °F (204 °C) und einem Druck unter etwa 500 psig (3450 kPag) zu lösen, und Abtrennen eines Teiles der zweiten abtrennbaren Phase aus der ersten Zwischenproduktzusammensetzung, um zu einer zweiten Zwischenproduktzusammensetzung zu gelangen, wobei wenigstens ein Teil der zweiten

15

Kohlenwasserstoffflüssigkeit in der zweiten Zwischenproduktzusammensetzung verbleibt; und

(3) Kontaktieren der zweiten Zwischenproduktzusammensetzung aus Stufe (2) mit einer dritten Kohlenwasserstoffflüssigkeit mit 2 bis 9 Kohlenstoffatomen für einen ausreichend langen Zeitraum, um wenigstens einen Teil der zweiten Kohlenwasserstoffflüssigkeit aus der zweiten Zwischenproduktzusammensetzung zu extrahieren und eine dritte abtrennbare Phase zu bilden, umfassend die dritte Kohlenwasserstoffflüssigkeit und die zweite Kohlenwasserstoffflüssigkeit, sowie Abtrennen von wenigstens einem Teil der dritten abtrennbaren Phase aus der zweiten Zwischenproduktzusammensetzung, um zu einem behandelten Produkt zu gelangen.

2. Verfahren nach Anspruch 1, dadurch gekennzeichnet, daß die Zusammensetzung weiterhin Wasser enthält.

3. Verfahren nach Anspruch 1, dadurch gekennzeichnet, daß die Zusammensetzung ein festes Abfallprodukt enthält.

4. Verfahren nach Anspruch 1, dadurch gekennzeichnet, daß die Zusammensetzung ein gefährliches Abfallprodukt enthält.

5. Verfahren nach Anspruch 1, dadurch gekennzeichnet, daß die Zusammensetzung Erdölabfall enthält.

6. Verfahren nach Anspruch 1, dadurch gekennzeichnet, daß die Zusammensetzung einen Raffinerieschlamm enthält.

7. Verfahren nach einem der Ansprüche 1 bis 6, dadurch gekennzeichnet, daß die erste und dritte Kohlenwasserstoffflüssigkeit einen aliphatischen oder cycloaliphatischen Kohlenwasserstoff mit 2 bis 9 Kohlenstoffatomen enthält, vorzugsweise mit 2 bis 4 Kohlenstoffatomen, und insbesondere ein verflüssigtes Erdölgas, Propan, Cyclopropan, Propylen, Butan, Isobutan, Cyclobutan, ein Butan, ein Butadien, Isobutylen oder ein Gemisch von zwei oder mehreren davon umfaßt.

8. Verfahren nach Anspruch 7, dadurch gekennzeichnet, daß die erste und dritte Kohlenwasserstoffflüssigkeit Propan oder ein verflüssigtes Erdölgas enthält.

9. Verfahren nach einem der Ansprüche 1 bis 8, dadurch gekennzeichnet, daß wenigstens 30 % vorzugsweise 50 % und insbesondere 95 Gew.-% der ersten und dritten Kohlenwasserstoffflüssigkeit sich in einem kondensierten Zustand befinden.

10. Verfahren nach einem der Ansprüche 1 bis 9, dadurch gekennzeichnet, daß die erste und dritte Kohlenwasserstoffflüssigkeit eine Temperatur im Bereich von 32 °F (0 °C) bis 300 °F (148 °C) hat, vorzugsweise im Bereich von 45 °F (4,5 °C) bis 220 °F (109 °C), insbesondere im Bereich von 60 °F (16 °C) bis 140 °F (60 °C).

11. Verfahren nach einem der Ansprüche 1 bis 10, dadurch gekennzeichnet, daß die erste und dritte Kohlenwasserstoffflüssigkeit einen Druck im Bereich von 50 bis 2000 psig (345 bis 13790 kPag) vorliegt, vorzugsweise im Bereich von 70 bis 1000 psig (483 bis 6895 kPag).

12. Verfahren nach einem der Ansprüche 1 bis 10, dadurch gekennzeichnet, daß die durchschnittliche Kontaktzeit zwischen der ersten und der dritten Kohlenwasserstoffflüssigkeit und den Festpartikeln 5 Minuten bis 24 Stunden beträgt, vorzugsweise 5 Minuten bis 10 Stunden und insbesondere 5 Minuten bis 5 Stunden.

13. Verfahren nach einem der Ansprüche 1 bis 12, dadurch gekennzeichnet, daß die zweite Kohlenwasserstoffflüssigkeit wenigstens eine aromatische Verbindung umfaßt, vorzugsweise Benzen, Toluen, Xylen oder ein Gemisch von zwei oder mehreren dieser.

14. Verfahren nach einem der Ansprüche 1 bis 13, dadurch gekennzeichnet, daß die zweite Kohlenwasserstoffflüssigkeit bei einer Temperatur im Bereich von 32 °F (0 °C) bis 400 °F (204 °C) vorliegt, vorzugsweise im Bereich von 100 °F (38 °C) bis 300 °F (149 °C), insbesondere im Bereich von 100 °F (38 °C) bis 250 °F (121 °C).

**15.** Verfahren nach einem der Ansprüche 1 bis 14, dadurch gekennzeichnet, daß die zweite Kohlenwasserstoffflüssigkeit bei einem Druck im Bereich von Normaldruck bis 100 psig (100,7 bis 689,5 kPag) vorliegt.

**16.** Verfahren nach einem der Ansprüche 1 bis 15, dadurch gekennzeichnet, daß die durchschnittliche Kontaktzeit zwischen der zweiten Kohlenwasserstoffflüssigkeit und den Festpartikeln 5 Minuten bis 24 Stunden beträgt vorzugsweise 5 Minuten bis 10 Stunden und insbesondere 5 Minuten bis 5 Stunden.

**17.** Verfahren nach einem der Ansprüche 1 bis 16, dadurch gekennzeichnet, daß die erste Kohlenwasserstoffflüssigkeit und die dritte Kohlenwasserstoffflüssigkeit gleich sind.

**18.** Verfahren nach einem der Ansprüche 1 bis 17, dadurch gekennzeichnet, daß die erste Kohlenwasserstoffflüssigkeit und die dritte Kohlenwasserstoffflüssigkeit jeweils Propan umfassen.

**19.** Verfahren nach einem der Ansprüche 1 bis 18, dadurch gekennzeichnet, daß wenigstens 30 %, vorzugsweise 50 % und insbesondere 95 Gew.-% der zweiten Kohlenwasserstoffflüssigkeit sich in einem kondensierten Zustand befinden.

**20.** Verfahren nach einem der Ansprüche 1 bis 19, dadurch gekennzeichnet, daß die zweite Kohlenwasserstoffflüssigkeit aus einem Aromaten-angereicherten Raffineriestrom herrührt.

**21.** Verfahren nach einem der Ansprüche 1 bis 20, dadurch gekennzeichnet, daß die zweite Kohlenwasserstoffflüssigkeit eine Reformierungsflüssigkeit umfaßt.

**22.** Verfahren nach einem der Ansprüche 1 bis 21, umfassend die Stufen Treiben der Festpartikel zu einer Kontaktanlage vor dem Transport der ersten Kohlenwasserstoffflüssigkeit durch die Feststoffe, Entfernen der Feststoffe aus der Kontaktanlage nach dem Treiben der dritten Kohlenwasserstoffflüssigkeit durch die Feststoffe und Rückführung wenigstens eines Teiles der Feststoffe in den Kontaktbehälter.

**23.** Verfahren nach einem der Ansprüche 1 bis 22, umfassend die Stufen vermischen der Feststoffe mit einem Nicht-Schlammaterial vor dem Treiben der ersten Kohlenswasserstoffflüssigkeit durch die Feststoffe.

**24.** Verfahren nach Anspruch 1 zur Abtrennung von Kohlenwasserstofföl und schweren organischen Rückständen aus einer Ausgangsmaterialzusammensetzung, umfassend Feststoffe im Gemisch mit dem Kohlenwasserstofföl und schweren organischen Rückständen, wobei die schweren organischen Rückstände höhere Siedepunkte als das Kohlenwasserstofföl aufweisen, wobei das Verfahren die folgenden Schritte umfaßt
(1) Kontaktieren der Einsatzmaterialzusammensetzung mit einer ersten Kohlenwasserstoffflüssigkeit mit 2 bis 9 Kohlenstoffatomen für einen ausreichenden Zeitraum, um wenigstens ein Teil des Kohlenwasserstofföls aus der Einsatzmaterialzusammensetzung zu extrahieren und eine erste abtrennbare Phase zu bilden, die das Kohlenwasserstofföl und die erste Kohlenwasserstoffflüssigkeit umfaßt, sowie Abtrennen von zumindest einem Teil der ersten abtrennbaren Phase aus der Einsatzmaterialzusammensetzung, um zu einer ersten Zwischenproduktzusammensetzung zu gelangen;
(2) Kontaktieren der ersten Zwischenproduktzusammensetzung aus Stufe (1) mit einer zweiten Kohlenwasserstoffflüssigkeit für einen ausreichenden Zeitraum, um wenigstens einen Teil der schweren organischen Rückstände aus der ersten Zwischenproduktzusammensetzung zu extrahieren und eine zweite abtrennbare Phase zu bilden, umfassend die zweite Kohlenwasserstoffflüssigkeit und die schweren organischen Rückstände, wobei die zweite Kohlenwasserstoffflüssigkeit in der Lage ist, die schweren organischen Rückstände bei einer Temperatur im Bereich von 30 °F (- 1 °C) bis 400 °F (204 °C) und einem Druck unter etwa 500 psig (3450 kPag) zu lösen, und Abtrennen eines Teiles der zweiten abtrennbaren Phase aus der ersten Zwischenproduktzusammensetzung, um zu einer zweiten Zwischenproduktzusammensetzung zu gelangen, wobei wenigstens ein Teil der zweiten Kohlenwasserstoffflüssigkeit in der zweiten Zwischenproduktzusammensetzung verbleibt; und
(3) Kontaktieren der zweiten Zwischenproduktzusammensetzung aus Stufe (2) mit einer dritten Kohlenwasserstoffflüssigkeit mit 2 bis 9 Kohlenstoffatomen für einen ausreichend langen Zeitraum, um wenigstens einen Teil der zweiten Kohlenwasserstoffflüssigkeit aus der zweiten Zwischenproduktzusammensetzung zu extrahieren und eine dritte abtrennbare Phase zu bilden, umfassend die dritte Kohlenwasserstoffflüssigkeit und die zweite Kohlenwasserstoffflüssigkeit, sowie Abtrennen von wenigstens einem Teil der dritten abtrennbaren Phase aus der zweiten Zwischenproduktzusammensetzung, um zu einem behandelten Produkt zu gelangen.

25. Verfahren nach Anspruch 1, dadurch gekennzeichnet, daß die erste Kohlenwasserstoffflüssigkeit und die dritte Kohlenwasserstoffflüssigkeit jeweils Propan umfassen, und die zweite Kohlenwasserstoffflüssigkeit umfaßt Benzen, Toluen, o-Xylen, m-Xylen, p-Xylen oder ein Gemisch von zwei oder mehreren dieser.

FEED

CONTACTOR

EFFLUENT

Fig.1

FEED

CONTACTOR

HYDROCARBON
FLUID TO
REFINERY
STREAM

SURGE
TANK

FLASH
VALVE

FLASH DRUM

SEPARATED
OIL

Fig.2

19

FEED

CONTACTOR

EFFLUENT

HYDROCARBON FLUID RECYCLE

CONDENSER

DISTILLATION COLUMN

REBOILER

SEPARATED OIL

Fig. 3

FEED

CONTACTOR

COMPRESSOR

FLASH VALVE

FLASH DRUM

SEPARATED OIL

HYDROCARBON FLUID RECYCLE

HEAT EXCHANGER

Fig. 4

20

SLUDGE FEED

FILTER AID

PRETREATMENT

WATER + OIL

FIG. 5

LIGHT HYDROCARBON FLUID MAKE-UP

HIGHER MOLECULER WEIGHT HYDROCARBON FLUID MAKE-UP

FLUID FEED

CONTACTOR

LIGHT HYDROCARBON FLUID RECYCLE

OPTIONAL MIXER

LOCAL RECIRCU-LATION PUMP (CAN GO EITHER WAY)

SECOND SEPARATOR

SEPARATOR

OPTIONAL PARTIAL SOLIDS RECYCLE

EFFLUENT STREAM

SEPARATED OIL

HEAVY ORGANIC COMPONENTS INCLUDING ASPHALTENES

DE-OILED NON-HAZARDOUS SOLIDS

EP 0 260 064 B1